(19) Europäisches Patentamt
European Patent Office
Office européen des brevets

(11) **EP 2 076 546 B1**

(12) **EUROPEAN PATENT SPECIFICATION**

(45) Date of publication and mention
of the grant of the patent:
**11.08.2010 Bulletin 2010/32**

(51) Int Cl.:
*C08F 2/00* (2006.01)     *C08F 10/02* (2006.01)
*C08F 297/08* (2006.01)   *C08K 5/04* (2006.01)
*C08K 5/053* (2006.01)    *C08L 23/04* (2006.01)

(21) Application number: **07819155.8**

(22) Date of filing: **19.10.2007**

(86) International application number:
**PCT/EP2007/009090**

(87) International publication number:
**WO 2008/049551 (02.05.2008 Gazette 2008/18)**

(54) **MULTIMODAL POLYETHYLENE MOLDING COMPOSITION FOR PRODUCING PIPES HAVING IMPROVED MECHANICAL PROPERTIES**

MULTIMODALE POLYETHYLENFORMMASSE ZUR HERSTELLUNG VON ROHREN MIT VERBESSERTEN MECHANISCHEN EIGENSCHAFTEN

COMPOSITION DE MOULAGE DE POLYÉTHYLÈNE MULTIMODAL POUR LA FABRICATION DE CONDUITS AYANT DES PROPRIÉTÉS MÉCANIQUES AMÉLIORÉES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **24.10.2006  EP 06022205**
**05.12.2006  US 872998 P**

(43) Date of publication of application:
**08.07.2009  Bulletin 2009/28**

(73) Proprietor: **Basell Polyolefine GmbH**
**50389 Wesseling (DE)**

(72) Inventors:
• **BERTHOLD, Joachim**
**83224 Grassau (DE)**
• **NITZ, Hansjörg**
**65931 Frankfurt (DE)**
• **ROTHHÖFT, Werner**
**65835 Liederbach am Taunus (DE)**
• **SCHULTE, Ulrich**
**65779 Kelkheim (DE)**
• **VOGT, Heinz**
**65929 Frankfurt (DE)**

(56) References cited:
EP-A- 0 739 937     EP-A- 1 574 549
EP-A- 1 731 565     WO-A-02/26880
WO-A-2007/045415    US-A1- 2002 156 214

**Description**

The present invention relates to a polyethylene molding composition having a multimodal molecular mass distribution and is particularly suitable for producing pipes with enlarged diameter and wall thickness. The invention relates also to a process for preparing this molding composition in the presence of a catalytic system comprising a Ziegler catalyst and a co-catalyst by means of a multistage reaction sequence comprising successive polymerization steps.

The expressions "polyethylene molding composition having a multimodal molecular mass distribution" or simply "multimodal polyethylene" refer to a polyethylene molding composition or a polyethylene having a molecular mass distribution curve of multimodal configuration, i.e. a polyethylene comprising a plurality of ethylene polymer fractions each of them having distinct or different molecular weights. For example, according to a preferred embodiment of the present invention, a multimodal polyethylene can be prepared via a multistage reaction sequence comprising successive polymerization steps carried out under predetermined different reaction conditions in respective reactors arranged in series so as to obtain respective polyethylene fractions having different molecular weights. A process of this type can be performed in a suspension medium: in this case, monomers and a molar mass regulator, preferably hydrogen, are firstly polymerized in a first reactor under first reaction conditions in the presence of a suspension medium and a suitable catalyst, preferably a Ziegler catalyst, then transferred to a second reactor and further polymerized under second reaction conditions, and, if the polyethylene to be prepared is for example trimodal, further transferred to a third reactor and further polymerized under third reaction conditions, with the first reaction conditions differing from the second and third reaction conditions so as to obtain three polyethylene fractions having different molecular weights. This difference in molecular weight in the different ethylene polymer fractions is normally evaluated through the weight average molecular weight $M_w$.

Although Ziegler catalysts are particularly suitable for the preferred applications of the present invention, it is also possible to use other catalysts, for example catalysts having a uniform catalyst center (or "single site" catalysts), e.g. metallocene catalysts.

Polyethylene is used on a large scale for pipes for which a material having a high mechanical strength, a low tendency to undergo creep and a high resistance to environmental stress cracking is required. At the same time, the material has to be able to be processed readily for the preparation of pipes, even if such pipes are prepared having an enlarged diameter and an increased wall thickness.

Polyethylene molding compositions having a unimodal or monomodal molecular mass distribution, i.e. comprising a single ethylene polymer fraction having a predetermined molecular weight, have disadvantages either in respect of their processability or because of their environmental stress cracking resistance or their mechanical toughness.

In comparison, molding compositions having a bimodal molecular mass distribution represent a technical step forward. They can be processed more readily and, at the same density like an unimodal composition, have a far better environmental stress cracking resistance and a higher mechanical strength.

EP 739 937 describes a pipe comprising such a molding composition which is based on polyethylene, has a bimodal molecular mass distribution, can be processed readily and nevertheless has good mechanical properties. However, in the preparation of pipes having an enlarged diameter of more than 50 cm and an increased wall thickness of more than 1.5 cm, a so called "sagging problem" often occurs inasmuch, as the polymer melt as soon as it is extruded into the pipe's shape starts flowing downwards under the influence of gravity before its solidification resulting into considerable differences in the pipe's wall thickness, if measured over the total circumference of the pipe. The sagging problem is addressed in more detail also in EP 1 320 570.

It was an object of the present invention to provide a molding composition based on polyethylene having improved processability inasmuch, as the sagging effect does not occur, especially if the molding composition is used as raw material for pipes having enlarged diameter and increased wall thickness. In combination therewith, the thus resulting pipes should possess an even better property combination in terms of environmental stress cracking resistance and mechanical strength, specifically over a long time period.

This object is surprisingly achieved by a polyethylene molding composition having a multimodal molecular mass distribution comprising from 45 to 55% by weight of a first ethylene homopolymer A, from 20 to 40% by weight of a second copolymer B comprising ethylene and another olefin having from 4 to 8 carbon atoms and from 15 to 30% by weight of a third ethylene copolymer C, where all percentages are based on the total weight of the molding composition, comprising additionally an amount of from 0.01 to 0.5 % by weight, based on the total weight of the molding composition, of an organic polyoxy compound having the general chemical formula:

$$R - [(CH_2)_n - O]_m - H$$

where n is an integer in the range from 1 to 10,
m is an integer in the range from 3 to 500 and
R is a hydrogen atom or an OH group or an alkyl group which has from 1 to 10 carbon atoms and may bear further substituents such as -OH, -COOH, -COOR, -OCH$_3$ or -OC$_2$H$_5$,
or an organic polyhydroxy compound having the general chemical formula:

$$\text{RO-CH}_2\text{-C-(CH}_2\text{-OR)}_3$$

where R can be a hydrogen atom or an alkyl group which has from 1 to 5 carbon atoms and may bear further substituents such as -OH, -COOH, -COOR, -OCH$_3$ or -OC$_2$H$_5$,
or a combination of the two.

The expressions "first ethylene homopolymer A", "second ethylene copolymer B" and "third ethylene copolymer C" refer to an ethylene homopolymer A, an ethylene copolymer B and an ethylene copolymer C, respectively, having different, preferably increasing molecular weights.

The invention further relates to a process for preparing this molding composition in a cascaded suspension polymerization and pipes having an enlarged diameter of equal or more than 50 cm and increased wall thickness of equal or more than 1.5 cm comprising this molding composition having quite outstanding mechanical strength properties combined with a high stiffness.

The polyethylene molding composition of the invention has a density at a temperature of 23°C in the range from 0.945 to 0.957 g/cm$^3$, preferably from 0,945 to 0,955 g/cm$^3$, more preferably from 0,948 to 0,955 g/cm$^3$, and a trimodal molecular mass distribution. The second copolymer B comprises proportions of further olefin monomer units having from 4 to 8 carbon atoms, in an amount of from 1 to 8 % by weight, based on the weight of the high molecular weight copolymer B. Examples of such co-monomers are 1-butene, 1-pentene, 1-hexene, 1-octene and 4-methyl-1-pentene. The third ethylene copolymer C likewise comprises one or more of the above-mentioned co-monomers in an amount in the range from 1 to 8 % by weight, based on the weight of the ultrahigh molecular weight ethylene copolymer C.

These preferred amounts of comonomers make it possible to achieve an improved environmental stress cracking resistance. Within these preferred ranges, the polyethylene molding composition advantageously has a further improved combination of mechanical properties.

Furthermore, the molding composition of the invention has a melt flow index in accordance with ISO 1133, expressed as MFI$_{190/5}$, in the range from 0.1 to 0.8 dg/min, in particular from 0.1 to 0.5 dg/min, and a viscosity number VN$_{tot}$, measured in accordance with ISO/R 1191 in decalin at a temperature of 135 °C, in the range from 200 to 600 cm$^3$/g, in particular from 250 to 550 cm$^3$/g, particularly preferably from 350 to 490 cm$^3$/g.

The trimodality as a measure of the position of the centers of gravity of the three individual molar mass distributions can be described by means of the viscosity numbers VN in accordance with ISO/R 1191 of the polymers formed in the successive polymerization stages. Here, attention should be paid to the following bandwidths of the polymers formed in the individual reaction stages:

The viscosity number VN$_1$ measured on the polymer after the first polymerization stage is identical to the viscosity number VN$_A$ of the low molecular weight polyethylene A and is, according to the invention, in the range from 50 to 120 cm$^3$/g, in particular from 60 to 100 cm$^3$/g.

The viscosity number VN$_2$ measured on the polymer after the second polymerization stage does not correspond to VN$_B$ of the relatively high molecular weight of the second polyethylene B formed in the second polymerization stage, but is instead the viscosity number of the mix of polymer A plus polymer B. According to the invention, VN$_2$ is in the range from 200 to 400 cm$^3$/g, in particular from 250 to 350 cm$^3$/g.

The viscosity number VN$_3$ measured on the polymer after the third polymerization stage does not correspond to VN$_C$ for the ultrahigh molecular weight of the third copolymer C formed in the third polymerization stage, which can likewise only be determined mathematically, but is instead the viscosity number of the mixture of polymer A, polymer B plus polymer C. According to the invention, VN$_3$ is in the range from 200 to 600 cm$^3$/g, in particular from 250 to 550 cm$^3$/g, particularly preferably from 350 to 490 cm$^3$/g.

As additionally present organic polyoxy compounds which have been found to be particularly useful polyethylene glycol, methoxypolyethylene glycol and polypropylene glycol have been found. Preference is given to using polyoxy compounds which have a mean molar mass in the range from 400 to 9000 g/mol. The preferred amounts in which these polyoxy compounds are used are in the range from 0.02 to 0.4 % by weight, particularly preferably from 0.1 to 0.3 % by weight.

As additionally present organic polyhydroxy compounds which have been found to be particularly useful pentaerythritol, trimethylolpropane, glycerol, mannitol and sorbitol have been found. The preferred amounts in which these polyhydroxy compounds are used are in the range from 0.02 to 0.4% by weight, particularly preferably from 0.1 to 0.3% by weight.

The polyethylene can be obtained by polymerization of the monomers in suspension at temperatures in the range from 70 to 100°C, preferably from 75 to 90 °C, at a pressure in the range from 2 to 10 bar and in the presence of a highly active Ziegler catalyst which is composed of a transition metal compound and an organoaluminum compound. The polymerization can be carried out in three stages, i.e. in three successive stages, whereby the molecular mass in each step being regulated by means of a molar mass regulator, preferably by the presence of hydrogen.

In particular, the polymerization process is preferably carried out with the highest hydrogen concentration being set in the first reactor. In the subsequent, further reactors, the hydrogen concentration is preferably somehow reduced, so that the hydrogen concentration used in the third reactor is lower with respect to hydrogen concentration used in the second reactor. Preferably, in the second reactor and in the third reactor, a predetermined co-monomer concentration is used, preferably increasing from the second reactor to the third reactor. As stated above, in the stages where a copolymer fraction is prepared, preferably in the second reactor and in the third reactor, ethylene is thus used as monomer and an olefin having from 4 to 8 carbon atoms is preferably used as co-monomer.

The molecular mass distribution of the polyethylene molding composition of the present invention is preferably trimodal. In this way, it is possible to obtain the above-mentioned advantageous combination of properties without excessively complicating the production process by providing three reactors in series, thereby advantageously keeping the dimensions of the plant in a somehow limited size. Thus, in order to prepare a trimodal polyethylene molding composition, the polymerization of ethylene is preferably carried out in a continuous process performed in three reactors connected in series, wherein different reaction conditions are respectively set in the three reactors. Preferably, the polymerization is performed in suspension: in the first reactor, a suitable catalyst, for example a Ziegler catalyst, is preferably fed in together with suspension medium, co-catalyst, ethylene and hydrogen.

Preferably, any co-monomer is not introduced in the first reactor. The suspension from the first reactor is then transferred to a second reactor in which ethylene, hydrogen and preferably also some predetermined amount of co-monomer, for example 1-butene, is added. The amount of hydrogen fed in the second reactor is preferably reduced compared to the amount of hydrogen fed in the first reactor. The suspension from the second reactor is transferred to the third reactor. In the third reactor, ethylene, hydrogen and, preferably, a predetermined amount co-monomer, for example 1-butene, preferably in an amount higher than the amount of co-monomer used in the second reactor, is introduced. The amount of hydrogen in the third reactor is reduced compared to the amount of hydrogen in the second reactor. From the polymer suspension leaving the third reactor the suspension medium is separated and the resulting polymer powder is mixed with the desired amount of additional organic polyoxy compound or the organic polyhydroxy compound or the additional unsaturated aliphatic hydrocarbon compound, thereafter dried and then preferably pelletized.

The preferred trimodality, i.e. the preferred trimodal configuration of the molecular mass distribution curve, can be described in terms of the position of the centers of gravity of the three individual molecular mass distributions by means of the viscosity numbers VN in accordance with ISO/R 1191 of the polymers obtained after each polymerization stages.

The first homopolymer A is preferably formed as low molecular weight ethylene homopolymer A in the first polymerization step: in this preferred embodiment, the viscosity number $VN_1$ measured on the polymer obtained after the first polymerization step is the viscosity number of the low molecular weight ethylene homopolymer A and is preferably in the range from 50 to 150 $cm^3/g$, more preferably from 60 to 120 $cm^3/g$, in particular from 65 to 100 $cm^3/g$.

According to alternative embodiments, either the second high molecular weight ethylene copolymer B or the third ultrahigh molecular weight copolymer C may be formed in the first polymerization step.

The second copolymer B is preferably formed as high molecular weight ethylene in the second polymerization step.

According to a particularly preferred embodiment, in which the low molecular weight ethylene homopolymer A is formed in the first polymerization step and the high molecular weight ethylene copolymer B is formed in the second polymerization step, the viscosity number $VN_2$ measured on the polymer obtained after the second polymerization step is the viscosity number of the mixture of the low molecular weight ethylene homopolymer A and of the high molecular weight ethylene copolymer B. $VN_2$ is preferably in the range from 70 to 180 $cm^3/g$, more preferably from 90 to 170 $cm^3/g$, in particular from 100 to 160 $cm^3/g$.

In this preferred embodiment, starting from these measured values of $VN_1$ and $VN_2$, the viscosity number $VN_B$ of the high molecular weight ethylene copolymer B can be for example calculated from the following empirical formula:

$$VN_B = \frac{VN_2 - w_1 \cdot VN_1}{1 - w_1}$$

where $w_1$ is the proportion by weight of the low molecular weight ethylene homopolymer formed in the first polymerization step, measured in % by weight, based on the total weight of the polyethylene having a bimodal molecular weight distribution formed in the first two steps.

The third copolymer C is preferably formed as ultrahigh molecular weight ethylene in the third polymerization step: in this preferred embodiment, as well as in the alternative embodiments where a different order of polymerization is provided, the viscosity number $VN_3$ measured on the polymer obtained after the third polymerization step is the viscosity number of the mix of the first low molecular weight ethylene homopolymer A, of the second high molecular weight ethylene copolymer B and of the third ultrahigh molecular weight ethylene copolymer C. $VN_3$ is preferably within the preferred ranges already defined above, i.e. from 150 to 300 cm$^3$/g, preferably from 150 to 280 cm$^3$/g, more preferably in the range from 180 to 260 cm$^3$/g, in particular in the range from 180 to 240 cm$^3$/g.

In this preferred embodiment, starting from these measured values of $VN_2$ and $VN_3$, the viscosity number $VN_C$ of the ultrahigh molecular weight copolymer C formed in the third polymerization step can be for example calculated from the following empirical formula:

$$VN_C = \frac{VN_3 - w_2 \cdot VN_2}{1 - w_2}$$

where $w_2$ is the proportion by weight of the polyethylene having a bimodal molecular weight distribution formed in the first two steps, measured in % by weight, based on the total weight of the polyethylene having a trimodal molecular weight distribution formed in all three steps.

Although the way to calculate the viscosity numbers of each ethylene polymer fraction of the polyethylene molding composition has been given with reference to a preferred case in which the low molecular weight ethylene homopolymer A, the high molecular weight copolymer B and, respectively, the ultra high molecular weight copolymer C are obtained in this order, this calculation method may applied also to different polymerization orders. In any case, in fact, independently from the order of production of the three ethylene polymer fractions, the viscosity number of the first ethylene polymer fraction is equal to the viscosity number $VN_1$ measured on the ethylene polymer obtained after the first polymerization step, the viscosity number of the second ethylene polymer fraction can be calculated starting from the proportion by weight $w_1$ of the first ethylene polymer fraction formed in the first polymerization step, measured in % by weight, based on the total weight of the polyethylene having a bimodal molecular weight distribution formed in the first two steps and from the viscosity numbers $VN_1$ and $VN_2$ measured on the polymers obtained after the second and, respectively, the third polymerization step, while the viscosity number of the third ethylene polymer fraction can be calculated starting from the proportion by weight $w_2$ of the polyethylene having a bimodal molecular weight distribution formed in the first two steps, measured in % by weight, based on the total weight of the polyethylene having a trimodal molecular weight distribution formed in all three steps and from the viscosity numbers $VN_2$ and $VN_3$ measured on the polymers obtained after the second and, respectively, the third polymerization step.

The polyethylene molding composition of the invention can further comprise additional additives in addition to the polyethylene. Such additives are, for example, heat stabilizers, antioxidants, UV absorbers, light stabilizers, metal deactivators, peroxide-destroying compounds, basic co-stabilizers in amounts of from 0 to 10 % by weight, preferably from 0 to 5 % by weight, but also carbon black, fillers, pigments, flame retardants or combinations of these in total amounts of from 0 to 50 % by weight, based on the total weight of the mixture.

As heat stabilizers, the molding composition of the invention can comprise phenolic antioxidants, in particular pentaerythrityl (3,5-di-tert-butyl-4-hydroxyphenyl)propionate which is obtainable under the trade name IRGANOX from Ciba Specialities, Germany.

The molding composition of the invention is particularly suitable for the production of pipes having enlarged diameter of more than 50 cm, preferably more than 70 cm, and increased wall thickness of more than 1.5 cm, preferably more than 2 cm.

The molding composition of the invention can be processed particularly well by the extrusion process to produce pipes and has a notched impact toughness (ISO) in the range from 8 to 14 kJ/m$^2$ and an environmental stress cracking resistance (ESCR) of > 500 h.

The notched impact toughness$_{iso}$ is measured in accordance with ISO 179-1/1eA/DIN 53453 at -30 °C. The dimensions of the specimen are 10 x 4 x 80 mm, with a V-notch having an angle of 45 °, a depth of 2 mm and a radius at the base of the notch of 0.25 mm being made in the specimen.

The environmental stress cracking resistance (ESCR) of the molding composition of the invention is determined by an internal measurement method and is reported in h. This laboratory method is described by M. Fleißner in Kunststoffe 77 (1987), p. 45 ff, and corresponds to ISO/CD 16770 which has come into force since. The publication shows that there is a relationship between the determination of the slow crack growth in the creep test on circumferentially notched test bars and the brittle branch of the long-term pressure test in accordance with ISO 1167. A shortening of the time to failure is achieved by shortening the crack initiation time by means of the notch (1.6 mm/razor blade) in 2 % strength aqueous Arkopal solution as environmental stress-cracking-promoting medium at a temperature of 80 °C and a tensile stress of 4 MPa. The specimens are produced by sawing three test specimens having dimensions of 10 x 10 x 90 mm from a pressed plate having a thickness of 10 mm. The test specimens are notched around the circumference in the middle by means of a razor blade in a notching apparatus constructed in-house for this purpose (see figure 5 of the publication). The notch depth is 16. mm.

**Example 1**

The polymerization of ethylene was carried out in a continuous process in three reactors connected in series. A Ziegler catalyst which had been prepared by the method of WO 91/18934, Example 2 and has the operations number 2.2 in the WO document, was introduced into the first reactor in an amount of 15.6 mmol/h together with sufficient suspension medium (hexane), triethylaluminum as co-catalyst in an amount of 240 mmol/h, ethylene and hydrogen. The amount of ethylene (= 68.9 kg/h) and the amount of hydrogen (= 62 g/h) were set so that a content of 24 % by volume of ethylene and a content of 66.5 % by volume of hydrogen were measured in the gas space of the first reactor; the remainder was a mixture of nitrogen and vaporized suspension medium.

The polymerization in the first reactor was carried out at a temperature of 84 °C.

The suspension from the first reactor was then transferred to a second reactor in which the content of hydrogen in the gas space had been reduced to 0.7 % by volume and into which an amount of 43.2 kg/h of ethylene together with an amount of 1470 g/h of 1-butene were fed. The reduction in the amount of hydrogen was achieved by means of an $H_2$ intermediate depressurization. 73.5 % by volume of ethylene, 0.7 % by volume of hydrogen and 4.8 % by volume of 1-butene were measured in the gas space of the second reactor; the remainder was a mixture of nitrogen and vaporized suspension medium.

The polymerization in the second reactor was carried out at a temperature of 85 °C.

The suspension from the second reactor was transferred via a further $H_2$ intermediate depressurization, by means of which the amount of hydrogen in the gas space in the third reactor was set to 0 % by volume, to the third reactor.

An amount of 24.3 kg/h of ethylene together with an amount of 475 g/h of 1-butene were fed into the third reactor. A content of ethylene of 72 % by volume, a content of hydrogen of 0 % by volume and a content of 1-butene of 5.3 % by volume were measured in the gas space of the third reactor; the remainder was a mixture of nitrogen and vaporized suspension medium.

The polymerization in the third reactor was carried out at a temperature of 84 °C.

The long-term activity of the polymerization catalyst required for the cascaded mode of operation described above was achieved by means of a specially developed Ziegler catalyst having the composition indicated in the WO document mentioned at the outset. A measure of the usability of this catalyst is its extremely high response to hydrogen and its high activity which remains constant over a long time period of from 1 to 8 hours.

The suspension medium was separated off from the polymer suspension leaving the third reactor, the powder was mixed with an amount of 0.2 % by weight of polyethylene glycol having a molar mass of 400 g/mol, the mix was thereafter dried and the powder was passed to pelletization.

The viscosity numbers and the proportions $w_A$, $w_B$ and $w_C$ of polymer A, B and C for the polyethylene molding composition prepared as described in Example 1 are reported in Table 1 below.

Table 1

| Example | 1 |
|---|---|
| $W_A$ [% by weight] | 50 |
| $W_B$ [% by weight] | 32 |
| $W_C$ [% by weight] | 18 |
| $VN_1$ [cm³/g] | 80 |
| $VN_2$ [cm³/g] | 305 |
| $VN_{tot}$ [cm³/g] | 450 |
| FNCT [h] | 3100 |
| MFR [g/10 min] | 0.32 |
| Density [g/cm³] | 0.947 |
| Tensile creep test (5 MPa/23 °C), elongation in [%] | 1.72 |
| AZN [kJ/m²] | 13.7 |

The abbreviations for the physical properties in Tables 1 and 2 have the following meanings:

- FNCT = environmental stress cracking resistance (Full Notch Creep Test) measured by the internal measurement method described by M. Fleißner in [h], conditions: 80 °C, 2.5 MPa, water/2 % of Arkopal.

- AZN = notched impact toughness$_{ISO}$ in accordance with ISO 179-1/1eA/DIN 53453 at -30 °C, reported in the unit kJ/m$^2$.

- Tensile creep test in accordance with DIN EN ISO 899 at 23 °C and a tensile stress of 5 MPa; the figure reported is the elongation in % after 96 h.

A pipe having the dimensions 60 x 8 cm was produced from the pelletized material on a pipe extrusion unit from Battenfeld at an output appearing in the following table 2 and a melt temperature appearing also in the following table 2. The pipes produced in this way had completely smooth surfaces, whereas their other properties are described in the following table 2.

Table 2

|  | Unit | Comparative example without PEG | Composition comprising 0.2 % PEG |
|---|---|---|---|
| Output | Kg/h | 400 | 400 |
| mass temperature | °C | 200 | 195 |
| Pressure | bar | 197 | 222 |
| Line speed | m/min | 0,053 | 0,053 |
| pipe's outer diameter | mm | 561 | 561 |
| wall thickness top | mm | 72 | 74 |
| wall thickness bottom | mm | 125 | 89 |

As demonstrated by Table 2, the pipe prepared from the composition according to the instant invention comprising only 0.2 % by weight of PEG is considerably less subjected to sagging as the pipe prepared by the same trimodal PE composition not comprising any PEG.

## Claims

1. A polyethylene molding composition having a multimodal molecular mass distribution for producing pipes, which comprises from 45 to 55 % by weight of a first ethylene homopolymer A, from 20 to 40 % by weight of a second copolymer B comprising ethylene and another olefin having from 4 to 8 carbon atoms and from 15 to 30 % by weight of a third ethylene copolymer C, where all percentages are based on the total weight of the molding composition and comprising additionally an amount of from 0.01 to 0.5 % by weight, based on the total weight of the molding composition, of an organic polyoxy compound having the general chemical formula:

$$R - [(CH_2)n\text{-}O]_m - H$$

where n is an integer in the range from 1 to 10,
m is an integer in the range from 3 to 500 and
R is a hydrogen atom or an OH group or an alkyl group which has from 1 to 10 carbon atoms and may bear further substituents such as -OH, -COOH, -COOR, -OCH$_3$ or -OC$_2$H$_5$,
or an organic polyhydroxy compound having the general chemical formula:

$$RO\text{-}CH_2\text{-}C\text{-}(CH_2\text{-}OR)_3$$

where R can be a hydrogen atom or an alkyl group which has from 1 to 5 carbon atoms and may bear further substituents such as -OH, -COOH, - COOR, -OCH$_3$ or -OC$_2$H$_5$,
or a combination of the two.

2. The polyethylene molding composition according to claim 1 which has a density at a temperature of 23 °C in the range from 0.945 to 0.957 g/cm$^3$.

3. The polyethylene molding composition according to claim 1 or 2, wherein the second copolymer B comprises from 1 to 8 % by weight, based on the weight of the second copolymer B, of further olefin monomer units having from 4 to 8 carbon atoms.

4. The polyethylene molding composition according to one or more of claims 1 to 3, wherein the third ethylene copolymer C comprises from 1 to 8 % by weight, based on the weight of the third ethylene copolymer C, of one or more comonomers having from 4 to 8 carbon atoms.

5. The polyethylene molding composition according to one or more of claims 1 to 4 which has a melt flow index in accordance with ISO 1133, expressed as $MFI_{190/5}$, in the range from 0.1 to 0.8 dg/min, preferably from 0.1 to 0.5 dg/min.

6. The polyethylene molding composition according to one or more of claims 1 to 5 which has a viscosity number $VN_{tot}$, measured in accordance with ISO/R 1191 in decalin at a temperature of 135 °C, in the range from 200 to 600 $cm^3$/g, preferably from 250 to 550 $cm^3$/g, particularly preferably from 350 to 490 $cm^3$/g.

7. The polyethylene molding composition according to one or more of claims 1 to 6 comprising as organic polyoxy compounds polyethylene glycol, methoxypolyethylene glycol or polypropylene glycol, preferably having a mean molar mass in the range from 400 to 9000 g/mol, in an amount in the range of from 0.02 to 0.4 % by weight, particularly preferably from 0.1 to 0.3 % by weight.

8. The polyethylene molding composition according to one or more of claims 1 to 6 comprising as organic polyhydroxy compounds pentaerythritol, trimethylolpropane, glycerol, mannitol or sorbitol in an amount in the range of from 0.02 to 0.4% by weight, particularly preferably from 0.1 to 0.3% by weight.

9. A process for preparing a polyethylene molding composition according to one or more of claims 1 to 8, which comprises carrying out the polymerization of the monomers in suspension at temperatures in the range from 70 to 100°C, preferably from 75 to 90°C, under a pressure in the range from 2 to 10 bar and in the presence of a highly active Ziegler catalyst which is composed of a transition metal compound and an organoaluminum compound and carrying out the polymerization in three stages in three reactors connected in series, with the molar mass of the polyethylene prepared in the respective stage being set in each case by means of hydrogen.

10. A pipe comprising a polyethylene molding composition according to one or more of claims 1 to 8 which has an environmental stress cracking resistance, expressed as the FNCT value, of greater than 1500 h, preferably greater than 2000 h, particularly preferably greater than 2500 h, and has a notched impact toughness in accordance with DIN 53453 at -30 °C of greater than 12.5 kJ/$m^2$.

**Patentansprüche**

1. Polyethylen-Formmasse mit einer multimodalen Molmassenverteilung zur Herstellung von Rohren, umfassend von 45 bis 55 Gew.-% eines ersten Ethylen-Homopolymers A, von 20 bis 40 Gew.-% eines zweiten Copolymers B, das Ethylen und ein anderes Olefin mit von 4 bis 8 Kohlenstoffatomen umfasst, und von 15 bis 30 Gew.-% eines dritten Ethylen-Copolymers C, worin alle prozentualen Anteile auf das Gesamtgewicht der Formmasse bezogen sind und zusätzlich eine Menge von 0,01 bis 0,5 Gew.-%, bezogen auf das Gesamtgewicht der Formmasse, einer organischen Polyoxyverbindung mit der allgemeinen chemischen Formel:

$$R\text{-}[(CH_2)_n\text{-}O]_m\text{-}H$$

worin n eine ganze Zahl im Bereich von 1 bis 10 ist,
m eine ganze Zahl im Bereich von 3 bis 500 ist und
R ein Wasserstoffatom oder eine OH-Gruppe oder eine Alkylgruppe mit von 1 bis 10 Kohlenstoffatom(en) ist und weitere Substituenten, wie zum Beispiel -OH, -COOH, -COOR, -$OCH_3$ oder -$OC_2H_5$ tragen kann,
oder eine organische Polyhydroxyverbindung mit der allgemeinen chemischen Formel:

$$RO\text{-}CH_2\text{-}C\text{-}(CH_2\text{-}OR)_3$$

worin R ein Wasserstoffatom oder eine Alkylgruppe mit von 1 bis 5 Kohlenstoffatom(en) sein kann und weitere Substituenten, wie zum Beispiel- OH, -COOH, -COOR, -OCH$_3$ oder -OC$_2$H$_5$ tragen kann, oder eine Kombination aus den beiden.

2. Polyethylen-Formmasse nach Anspruch 1 mit einer Dichte bei einer Temperatur von 23 °C im Bereich von 0,945 bis 0,957 g/cm$^3$.

3. Polyethylen-Formmasse nach Anspruch 1 oder 2, worin das zweite Copolymer B von 1 bis 8 Gew.-%, bezogen auf das Gewicht des zweiten Copolymers B, von weiteren Monomereinheiten mit von 4 bis 8 Kohlenstoffatomen umfasst.

4. Polyethylen-Formmasse nach einem oder mehr der Ansprüche 1 bis 3, worin das dritte Ethylen-Copolymer C von 1 bis 8 Gew.-%, bezogen auf das Gewicht des dritten Copolymers C, von einem oder mehr Comonomer(en) mit von 4 bis 8 Kohlenstoffatomen umfasst.

5. Polyethylen-Formmasse nach einem oder mehr der Ansprüche 1 bis 4 mit einem Schmelzflussindex nach ISO 1133, ausgedrückt als MFI$_{190/5}$, im Bereich von 0,1 bis 0.8 dg/min, bevorzugt von 0,1 bis 0,5 dg/min.

6. Polyethylen-Formmasse nach einem oder mehr der Ansprüche 1 bis 5 mit einer Viskositätszahl VN$_{tot}$, die nach ISO/R 1191 in Dekalin bei einer Temperatur von 135 °C gemessen, im Bereich von 200 bis 600 cm$^3$/g, bevorzugt von 250 bis 550 cm$^3$/g, insbesondere bevorzugt von 350 bis 490 cm$^3$/g liegt.

7. Polyethylen-Formmasse nach einem oder mehr der Ansprüche 1 bis 6, umfassend als organische Polyoxyverbindungen Polyethylenglykol, Methoxypolyethylenglykol oder Polypropylenglykol, bevorzugt mit einer mittleren Molmasse im Bereich von 400 bis 9000 g/mol, in einer Menge im Bereich von 0,02 bis 0,4 Gew.-%, insbesondere bevorzugt von 0,1 bis 0,3 Gew.-%.

8. Polyethylen-Formmasse nach einem oder mehr der Ansprüche 1 bis 6, umfassend als organische Polyhydroxyverbindungen Pentaerythritol, Trimethylolpropan, Glycerol, Mannitol oder Sorbitol in einer Menge im Bereich von 0,02 bis 0,4 Gew.-%, insbesondere bevorzugt von 0,1 bis 0,3 Gew.-%.

9. Verfahren zur Herstellung einer Polyethylen-Formmasse nach einem oder mehr der Ansprüche 1 bis 8, umfassend die Durchführung der Polymerisation der Monomere in Suspension bei Temperaturen im Bereich von 70 bis 100 °C, bevorzugt 75 bis 90 °C, unter einem Druck im Bereich von 2 bis 10 bar und in Anwesenheit eines hoch aktiven Ziegler-Katalysators, der sich aus einer Übergangsmetallverbindung und einer Organoaluminiumverbindung zusammensetzt, und Durchführung der Polymerisation in drei Stufen in drei in Reihe verbundenen Reaktoren, wobei die Molmasse des in der entsprechenden Stufe hergestellten Polyethylens jeweils mittels Wasserstoff eingestellt wird.

10. Rohr, umfassend eine Polyethylen-Formmasse nach einem oder mehr der Ansprüche 1 bis 8 mit einer Spannungsrissbeständigkeit, ausgedrückt als der FNCT-Wert von größer als 1500 h, bevorzugt größer als 2000 h, insbesondere größer als 2500 h, und mit einer Kerbschlagzähigkeit nach DIN 53453 bei -30 °C von größer als 12,5 kJ/m$^2$.

**Revendications**

1. Composition de moulage de polyéthylène présentant une distribution multimodale des masses moléculaires pour la production de tuyaux, qui comprend 45 à 55% en poids d'un premier homopolymère d'éthylène A, 20 à 40% en poids d'un deuxième copolymère B comprenant de l'éthylène et une autre oléfine comprenant 4 à 8 atomes de carbone et 15 à 30% en poids d'un troisième copolymère d'éthylène C, tous les pourcentages étant basés sur le poids total de la composition de moulage et comprenant en plus une quantité de 0,01 à 0,5% en poids, sur base du poids total de la composition de moulage, d'un composé polyoxy organique présentant la formule chimique générale :

$$R-[(CH_2)_n-O]_m-H$$

où

n est un entier dans la plage de 1 à 10,
m est un entier dans la plage de 3 à 500 et

R est un atome d'hydrogène ou un groupe OH ou un groupe alkyle qui présente 1 à 10 atomes de carbone et peut porter d'autres substituants tels que -OH, -COOH, -COOR, -OCH$_3$ ou -OC$_2$H$_5$,

ou un composé organique polyhydroxy présentant la formule chimique générale :

$$RO-CH_2-C-(CH_2-OR)_3$$

où R peut être un atome d'hydrogène ou un groupe alkyle qui présente 1 à 5 atomes de carbone et peut porter d'autres substituants tels que -OH, -COOH, -COOR, -OCH$_3$ ou -OC$_2$H$_5$, ou une combinaison des deux.

2. Composition de moulage de polyéthylène selon la revendication 1, qui présente une densité, à une température de 23°C, dans la plage de 0,945 à 0,957 g/cm$^3$.

3. Composition de moulage de polyéthylène selon la revendication 1 ou 2, dans laquelle le deuxième copolymère B comprend 1 à 8% en poids, sur base du deuxième copolymère B, d'autres unités monomères oléfiniques, comprenant 4 à 8 atomes de carbone.

4. Composition de moulage de polyéthylène selon l'une ou plusieurs des revendications 1 à 3, dans laquelle le troisième copolymère d'éthylène C comprend 1 à 8% en poids, sur base du troisième copolymère C, d'un ou de plusieurs comonomères comprenant 4 à 8 atomes de carbone.

5. Composition de moulage de polyéthylène selon l'une ou plusieurs des revendications 1 à 4 qui présente un indice de fluage conformément à la norme ISO 1133, exprimé par MFI$_{190/5}$, dans la plage de 0,1 à 0,8 dg/min, de préférence de 0,1 à 0,5 dg/min.

6. Composition de moulage de polyéthylène selon l'une ou plusieurs des revendications 1 à 5, présentant un indice de viscosité VN$_{tot}$, mesuré conformément à la norme ISO/R 1191 dans de la décaline à une température de 135°C, dans la plage de 200 à 600 cm$^3$/g, de préférence de 250 à 550 cm$^3$/g, de manière particulièrement préférée de 350 à 490 cm$^3$/g.

7. Composition de moulage de polyéthylène selon l'une ou plusieurs des revendications 1 à 6 comprenant comme composés organiques polyoxy du polyéthylèneglycol, du méthoxypolyéthylèneglycol ou du polypropylèneglycol, présentant de préférence une masse molaire moyenne dans la plage de 400 à 9000 g/mole, en une quantité dans la plage de 0,02 à 0,4% en poids, de manière particulièrement préférée de 0,1 à 0,3% en poids.

8. Composition de moulage de polyéthylène selon l'une ou plusieurs des revendications 1 à 6 comprenant comme composés organiques polyhydroxy du pentaérythritol, du triméthylolpropane, du glycérol, du mannitol ou du sorbitol en une quantité dans la plage de 0,02 à 0,4% en poids, de manière particulièrement préférée de 0,1 à 0,3% en poids.

9. Procédé pour préparer une composition de moulage de polyéthylène selon l'une ou plusieurs des revendications 1 à 8, qui comprend la réalisation de la polymérisation des monomères en suspension à des températures dans la plage de 70 à 100°C, de préférence de 75 à 90°C, sous une pression dans la plage de 2 à 10 bars et en présence d'un catalyseur de Ziegler hautement actif, qui est composé d'un composé de métal de transition et d'un composé d'organoaluminum et la réalisation de la polymérisation en trois étapes dans trois réacteurs connectés en série, avec la masse molaire du polyéthylène préparé dans chaque étape étant réglée dans chaque cas au moyen d'hydrogène.

10. Tuyau comprenant une composition de moulage de polyéthylène selon l'une ou plusieurs des revendications 1 à 8 qui présente une résistance à la craquelure sous l'effet d'une contrainte environnementale, exprimée par la valeur FNCT, supérieure à 1500 h, de préférence supérieure à 2000 h, de manière particulièrement préférée supérieure à 2500 h, et qui présente une résistance au choc sur éprouvette entaillée selon la norme DIN 53453 à -30°C supérieure à 12,5 kJ/m$^2$.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 739937 A
- EP 1320570 A

- WO 9118934 A